# EUROPEAN PATENT APPLICATION

(11) **EP 1 745 995 A1**
(43) Date of publication of application: **24.01.2007**
(21) Application number: 06015091.9
(22) Date of filing: 19.07.2006
(51) Int. Cl.: B60R 22/44

(54) **Seat belt controlling system and method of controlling seat belt**

(30) Priority: 20.07.2005 JP 2005210228
(71) Applicant: NISSAN MOTOR CO., LTD., Yokohama-shi Kanagawa-ken (JP)
(72) Inventor: Takemura, Noriaki, Ebina-shi Kanagawa-ken (JP)
(74) Representative: Görz, Ingo

(57) **Abstract**

A seat belt controlling system (10), includes: an outputting system (9) outputting a signal showing a rotary state of each of wheels of a vehicle (1); a determinant (11) determining whether or not a restraining of a seat occupant of the vehicle (1) is necessary, based on the signals which are from the outputting system (9) and correspond to the respective wheels; and a seat belt controller (11) implementing the following windings of a seat belt (13L,13R): a first winding implemented when the determinant (11) determines that two or more of the wheels are in a state necessary for the restraining of the seat occupant, and a second winding implemented when the determinant (11) determines that one of the wheels is in a state necessary for the restraining of the seat occupant. The second winding is weaker than the first winding in winding force. The first winding is implemented after a continuation of a certain time of the second winding.

## Description

### BACKGROUND OF THE INVENTION

### 1. Field of the invention

The present invention relates to a seat belt controlling system for controlling a seat belt which restrains a seat occupant, and relates to a method of controlling the seat belt.

### 2. Description of the Related Art

Japanese Patent Application Laid-Open No. 2001-1347923 (JP20011347923) discloses a motor-type seat belt retractor which uses a conventional technology having the following operations: sensing as a vehicle state a possibility that a vehicle causes a collision; restraining a seat occupant by operating, based on the vehicle state, a motor which winds a seat belt; and increasing an initial restraining force which is observed when it is determined that the seat occupant needs to be restrained.

In addition, for sensing the vehicle state, the above motor-type seat belt retractor has a vehicle behavior sensing function or a slip sensing function, thus controlling winding of the seat belt referring to the vehicle behavior or slip state. Moreover, the above motor-type seat belt retractor uses an output signal of an ABS (Anti-lock Brake System). For preventing lockup of a wheel, the ABS controls a brake pressure based on a rotary sensor for sensing each wheel's rotary speed as the vehicle state.

### SUMMARY OF THE INVENTION

It is an object of the present invention to provide a seat belt controlling system for decreasing a seat occupant's discomfort which may be caused by winding of a seat belt, where the seat belt controlling system can, when necessary, decrease time lag by the time winding of the seat belt is started.

According to a first aspect of the present invention, there is provided a seat belt controlling system, comprising: 1) an outputting system for outputting a signal showing a rotary state of each of wheels of a vehicle; 2) a determinant for determining whether or not a restraining of a seat occupant of the vehicle is necessary, based on the signals which are outputted from the outputting system and correspond to the respective wheels; and 3) a seat belt controller for implementing the following windings of a seat belt: a) a first winding implemented when the determinant determines that two or more of the wheels are in a state necessary for the restraining of the seat occupant, and b) a second winding implemented when the determinant determines that one of the wheels is in a state necessary for the restraining of the seat occupant, the second winding being weaker than the first winding in winding force, the first winding being implemented after a continuation of a certain time of the second winding.

According to a second aspect of the present invention, there is provided a method of controlling a seat belt, comprising: 1) outputting a signal showing a rotary state of each of wheels of a vehicle; 2) determining whether or not a restraining of a seat occupant of the vehicle is necessary, based on the signals which are outputted by the outputting operation and correspond to the respective wheels; and 3) implementing the following windings of a seat belt: a) a first winding implemented when the determining operation determines that two or more of the wheels are in a state necessary for the restraining of the seat occupant, and b) a second winding implemented when the determining operation determines that one of the wheels is in a state necessary for the restraining of the seat occupant, the second winding being weaker than the first winding in winding force, the first winding being implemented after a continuation of a certain time of the second winding.

According to a third aspect of the present invention, there is provided a seat belt controlling system, comprising: 1) means for outputting a signal showing a rotary state of each of wheels of a vehicle; 2) means for determining whether or not a restraining of a seat occupant of the vehicle is necessary, based on the signals which are outputted from the outputting means and correspond to the respective wheels; and 3) means for implementing the following windings of a seat belt: a) a first winding implemented when the determining means determines that two or more of the wheels are in a state necessary for the restraining of the seat occupant, and b) a second winding implemented when the determining means determines that one of the wheels is in a state necessary for the restraining of the seat occupant, the second winding being weaker than the first winding in winding force, the first winding being implemented after a continuation of a certain time of the second winding.

The other object(s) and feature(s) of the present invention will become understood from the following description with reference to the accompanying drawings.

### BRIEF DESCRIPTION OF THE DRAWINGS

Fig. 1 is a block diagram showing a structure of a vehicle including a seat belt controlling system, under the present invention.

Fig. 2 is a flow chart showing operations of the seat belt controlling system, according to a first embodiment of the present invention.

Fig. 3 is a flow chart showing operations of the seat belt controlling system, according to a second embodiment of the present invention.

### DESCRIPTION OF THE PREFERRED EMBODIMENTS

Hereinafter, a seat belt controlling system 10 is to be set forth referring to drawings, according to embodiments of the present invention.

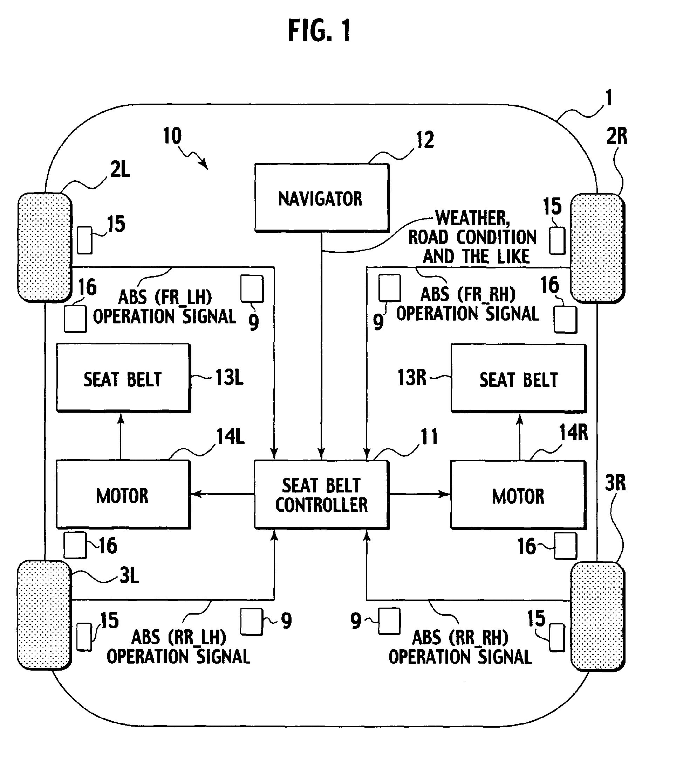

The seat belt controlling system 10 is installed on a vehicle 1 having a structure shown, for example, in Fig. 1.

The vehicle 1 includes: for example, a seat belt 13R for restraining a seat occupant who is seated on a seat occupant seat, a motor 14R for winding the seat belt 13R, a seat belt 13L for restraining a co-seat occupant who is seated on a passenger seat, and a motor 14L for winding the seat belt 13L. During winding of the seat belt 13R and the seat belt 13L, the seat belt controller 11 controls the motor 14R and the motor 14L respectively.

In addition, the vehicle 1 includes: a rotary speed sensor 15 for sensing a rotary speed of each of a right front wheel 2R, a left front wheel 2L, a right rear wheel 3R and a left rear wheel 3L, and a brake pressure controlling gear 16 for controlling a brake pressure in such a manner as to prevent lockup of each of the wheels 2R, 2L, 3R and 3L. In addition, the vehicle 1 includes an ABS (Anti-lock Brake System) 9 (in other words, an outputting system) for controlling the brake pressure by sensing from the rotary speed sensor 15 the rotary speed of each of the wheels 2R, 2L, 3R and 3L.

From the ABS 9, the seat belt controller 11 obtains an ABS operation signal showing that controlling the brake pressure of each of the wheels 2R, 2L, 3R and 3L prevents lockup of one of the respective wheels 2R, 2L, 3R and 3L. In Fig. 1, an operation signal ABS (FR_RH) signifies that the right front wheel 2R is controlled with the ABS 9, an operation signal ABS (FR_LH) signifies that the left front wheel 2L is controlled with the ABS 9, an operation signal ABS (RR_RH) signifies that the right rear wheel 3R is controlled with the ABS 9, and an operation signal ABS (RR_LH) signifies that the left rear wheel 3L is controlled with the ABS 9.

The seat belt controller 11 inputs the operation signals ABS (FR_RH), ABS (FR_LH), ABS (RR_RH) and ABS (RR_LH) each of which denotes a rotary state of one of the respective wheels 2R, 2L, 3R and 3L and determines whether or not the seat occupant needs to be restrained by the seat belts 13R and 13L. Then, based on the operation signals ABS (FR_RH), ABS (FR_LH), ABS (RR_RH) and ABS (RR_LH), the seat belt controller 11 drives the motors 14R and 14L, thereby winding the seat belts 13R and 13L. With the above operations, based on output signals, namely, the operation signals ABS (FR_RH), ABS (FR_LH), ABS (RR_RH) and ABS (RR_LH) corresponding to the respective wheels 2R, 2L, 3R and 3L, the seat belt controller 11 determines whether or not the seat occupant needs to be restrained, featuring a function as a determinant. In a nutshell, the seat belt controlling system 10 includes the outputting system 9, the determinant 11 and the seat belt controller 11.

In addition, the vehicle 1 includes a navigator 12 (vehicle state sensor) for obtaining pieces of information such as weather information, road information and the like and sending the above information to the seat belt controller 11. The seat belt controller 11 can wind the seat belts 13R and 13L based only on the operation signals ABS (FR_RH), ABS (FR_LH), ABS (RR_RH) and ABS (RR_LH). The seat belt controller 11 can, however, wind the seat belts 13R and 13L based on the weather information or the road information, in addition to the operation signals ABS (FR_RH), ABS (FR_LH), ABS (RR_RH) and ABS (RR_LH).

### <First embodiment>

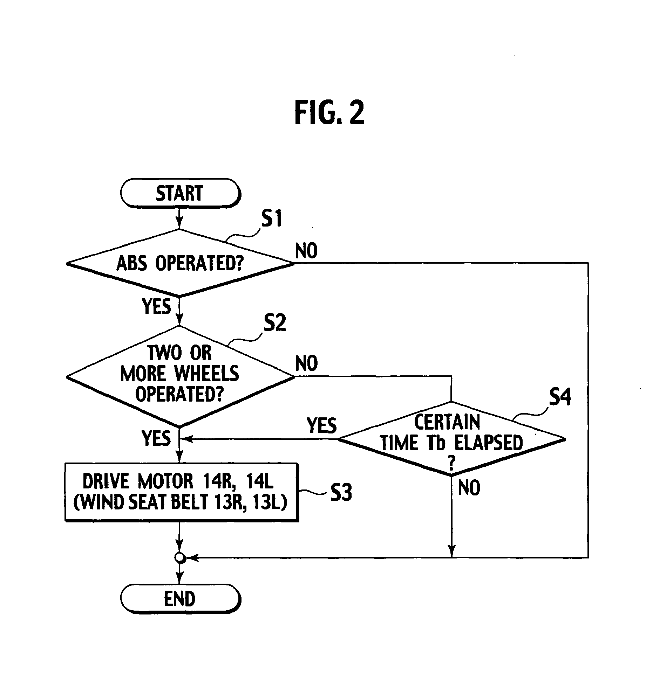

Hereinafter set forth referring to a flow chart in Fig. 2 are controlling operations for winding the seat belts 13R and 13L with the seat belt controller 11 (seat belt controlling system 10) in the vehicle 1 having the above structure, according to a first embodiment of the present invention.

### <Step S1>

During a travel of the vehicle 1 after starting, the seat belt controller 11 repeatedly starts operations of step S1 at certain time intervals Ta (for example, 100 msec).

Firstly, at step S1, the seat belt controller 11 determines whether or not any of the operation signals ABS (FR_RH), ABS (FR_LH), ABS (RR_RH) and ABS (RR_LH) is inputted each as a signal showing the state of one of the respective wheels 2R, 2L, 3R and 3L.
* When Yes at step S1, specifically, when the operation signal showing a state of at least one of the wheels 2R, 2L, 3R and 3L is inputted, the seat belt controller 11 determines that the ABS 9 is operated, to thereafter proceed to step S2.
* When No at step S1, the seat belt controller 11 ends the operation.

### <Step S2>

At step S2, the seat belt controller 11 determines whether or not the ABSs 9 of two or more of the wheels 2R, 2L, 3R and 3L are simultaneously operated at step S1.
* When Yes at step S2, the seat belt controller 11 proceeds to step S3.
* When No at step S2, in other words, when the ABS 9 of only one of the wheels 2R, 2L, 3R and 3L is operated, the seat belt controller 11 proceeds to step S4.

### <Step S3>

The seat belt controller 11 so controls the motors 14R and 14L as to wind the respective seat belts 13R and 13L with a normal winding force (first winding).

### <Step S4>

At step S4, by counting a period of continuous operation of the ABS 9, the seat belt controller 11 determines whether or not the ABS 9 is continuously operated for a certain time Tb (for example, 1 second).
* When Yes at step S4, the seat belt controller 11 proceeds to step S3.
* When No at step S4, in other words, when the ABS 9's operation is ended before an elapse of the certain time Tb, the seat belt controller 11 ends the operation.
According to the first embodiment, when the ABS 9's operation is ended before an elapse of the certain time Tb, the seat belt controller 11 ends the operation. Otherwise, however, a second winding can be implemented with a winding force weaker than the normal winding force of the first winding at step S3, in other words, can be implemented more slowly or with decreased force compared with the first winding.

In a nutshell, when the operation signals showing that two or more of the wheels 2R, 2L, 3R and 3L are simultaneously operated are inputted, the seat belt controller 11 according to the first embodiment of the present invention can wind the seat belts 13R and 13L in a short time immediately after the operation of the ABSs 9, in other words, without the need for waiting for the elapse of certain time Tb. With this, the seat belt controller 11 can improve an initial restraining property at the collision of the vehicle 1. In addition, when the ABS 9 of only one of the wheels 2R, 2L, 3R and 3L is operated, the seat belt controller 11 does not implement the first winding of the seat belts 13R and 13L unless the ABS 9's operation continues after the elapse of the certain time Tb. With this, absence of the seat belts 13R and 13L's first winding for a temporary ABS 9's operation can decrease discomfort of the seat occupant.

The above is summed up below. When two or more of the wheels 2R, 2L, 3R and 3L are determined to be in a state necessary for restraining the seat occupant, the seat belt controller 11 winds the seat belts 13R and 13L (first winding with the normal winding force). Meanwhile, when only one of the wheels 2R, 2L, 3R and 3L is determined to be in a state necessary for restraining the seat occupant, the seat belt controller 11 may implement, for a continuation of the certain time Tb, the second winding of the seat belts 13R and 13L with the winding force weaker than the normal winding force of the first winding. Thereafter, the seat belt controller 11 implements the first winding.

### <Second embodiment>

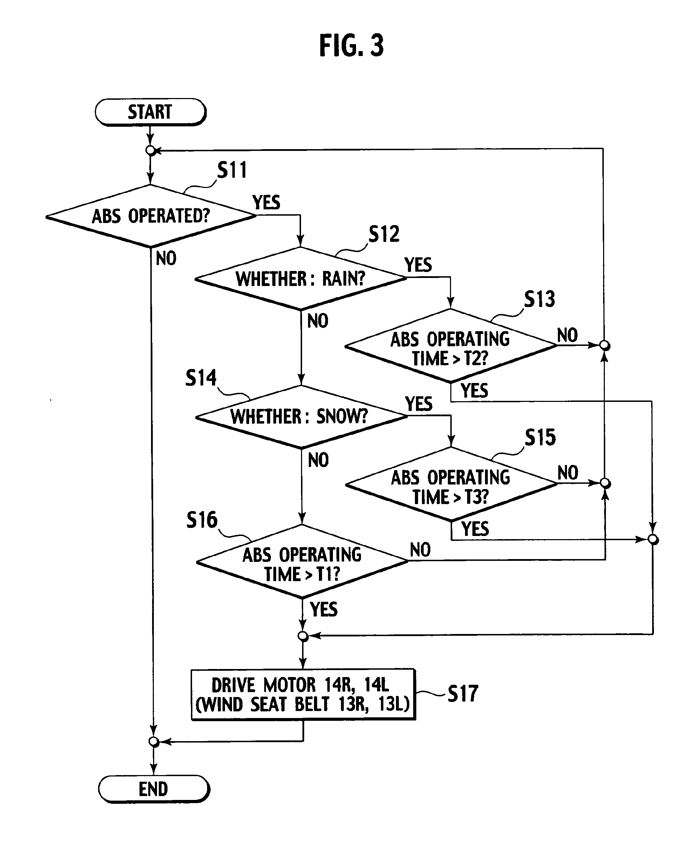

Hereinafter set forth referring to a flow chart in Fig. 3 are other operations of the seat belt controller 11 (seat belt controlling system 10), according to a second embodiment of the present invention.

The seat belt controller 11 takes the following operations: obtaining from the navigator 12 pieces of information around the vehicle 1, including weather information, road information and the like; determining a state where the operation of the ABS 9 is highly likely, including slippery of the wheels 2R, 2L, 3R and 3L, obstacles around the vehicle 1, and a pedestrian around the vehicle 1, and the like; and changing a certain time (T1, T2, T3) for winding the seat belts 13R and 13L after sensing a state of operating the ABS 9 of only one of the wheels 2R, 2L, 3R and 3L.

### <Step S11>

Firstly, at step S11 in Fig. 3, the seat belt controller 11 determines whether or not any of the operation signals ABS (FR_RH), ABS (FR_LH), ABS (RR_RH) and ABS (RR_LH) is inputted each as a signal showing the state of one of the respective wheels 2R, 2L, 3R and 3L.
* When Yes at step S11, specifically, when the operation signal showing a state of at least one of the wheels 2R, 2L, 3R and 3L is inputted, the seat belt controller 11 determines that the ABS 9 is operated, to thereafter proceed to step S12.
* When No at step S11, the seat belt controller 11 ends the operation.

### <Step S12>

Then, based on the weather information obtained from the navigator 12, the seat belt controller 11 at step S12 determines whether or not the weather around the vehicle 1 is rainy.
* When Yes at step S12, the seat belt controller 11 proceeds to step S13.
* When No at step S12, the seat belt controller 11 proceeds to step S14.

### <Step S14>

The seat belt controller 11 at step S14 determines whether or not the weather around the vehicle 1 is snowy.
* When Yes at step S14, the seat belt controller 11 proceeds to step S15.
* When No at step S14, the seat belt controller 11 proceeds to step S16.

### <Step S16>

When the weather around the vehicle 1 is not rainy or snowy, the seat belt controller 11 at step S16 sets to a first certain time T1 (standard time, for example, 1 second which is longest) for winding the seat belts 13R and 13L in the operation of the ABS 9 of only one of the wheels 2R, 2L, 3R and 3L. Then, the seat belt controller 11 determines whether or not the ABS 9's operation time is over the first certain time T1.
* When Yes at step S16, the seat belt controller 11 proceeds to step S17.
* When No at step S16, the seat belt controller 11 returns to step S11.

### <Step S17>

The seat belt controller 11 so controls the motors 14R and 14L as to wind the seat belts 13R and 13L respectively, to thereafter end the operation.

### <Step S13>

After setting to a second certain time T2 (for example, 0.5 second) which is shorter than the first certain time T1 (for example, 1 second), the seat belt controller 11 determines whether or not the ABS 9's operation time is over the second certain time T2.
* When Yes at step S13, the seat belt controller 11 proceeds to step S17.
* When No at step S13, the seat belt controller 11 returns to step S11.

### <Step S17>

The seat belt controller 11 so controls the motors 14R and 14L as to wind the seat belts 13R and 13L respectively.

* Herein, when the weather around the vehicle 1 is rainy, the wheels 2R, 2L, 3R and 3L are more likely to cause slippery than without the rain or snow, thereby increasing possibility of operating the ABS 9. Therefore, the seat belt controller 11 sets to the second certain time T2 shorter than the first certain time T1.

As set forth above, when Yes at step S14, the seat belt controller 11 proceeds to step S15.

### <Step S15>

At step S15, after setting to a third certain time T3 (for example, 0.2 second) which is shorter than the second certain time T2 (for example, 0.5 second), the seat belt controller 11 determines whether or not the ABS 9's operation time is over the third certain time T3.
* When Yes at step S15, the seat belt controller 11 proceeds to step S17.
* When No at step S15, the seat belt controller 11 returns to step S11.

### <Step S17>

The seat belt controller 11 so controls the motors 14R and 14L as to wind the seat belts 13R and 13L respectively.

* Herein, when the weather around the vehicle 1 is snowy, the wheels 2R, 2L, 3R and 3L are more likely to cause slippery than when rainy, thereby increasing possibility of operating the ABS 9. Therefore, the seat belt controller 11 sets to the third certain time T3 shorter than the second certain time T2.

In a nutshell, not only based on the operation signals ABS (FR_RH), ABS (FR_LH), ABS (RR_RH) and ABS (RR_LH), the seat belt controller 11 according to the second embodiment of the present invention so controls the winding of the seat belts 13R and 13L based on the information from the navigator 12. In the following states, the seat belt controller 11 having the above operation can, thereby, shorten the certain time (namely, T1 --> T2 --> T3) for starting the winding of the seat belts 13R and 13L: i) a state where the wheels 2R, 2L, 3R and 3L are likely to cause slippery, such as bad weather, a high land at low temperature, and traveling a mountainous road, and ii) a state having many obstacles, such as congested road, congested city and the like. In addition, by determining stepwise the states which are likely to cause the ABS 9's operation, the seat belt controller 11 according to the second embodiment changes the certain times T2 and T3 stepwise relative to the standard time T1. In addition, the first certain time T1 (standard time) can be changed, for example, to 0.5 second when the vehicle 1 is traveling the congested road, or to 0.7 second when the vehicle 1 is traveling the city road.

Herein, the operations in Fig. 3 use the weather information only. Otherwise, the weather information and the road information may be combined, so that the certain times T1, T2 and T3 are changed in accordance with a state which is likely to operate the ABS 9 due to a possible slippery. In addition, the seat belt controller 11 in Fig. 3 can adjust the force for winding the seat belt 13R and 13L according to travel scene of the vehicle 1, thereby further improving the seat occupant restraining property, thus decreasing discomfort of the seat occupant.

In addition, for decreasing the seat occupant's influence on driving operation which influence caused by posture change of the seat occupant, the seat belt controller 11 under the present invention controls winding of the seat belts 13R and 13L. By changing the winding force of each of the seat belts 13R and 13L of the vehicle 1 (specifically, the driver's seat, the passenger seat, and each of the rear seats), the seat belt controller 11 can further decrease incompatibility or discomfort which may be caused by the operation of the seat belts 13R and 13L.

Although the present invention has been described above by reference to two embodiments, the present invention is not limited to the two embodiments described above. Within the scope of the technical concept of the present invention, modifications and variations of the two embodiments described above will occur to those skilled in the art, in light of the above teachings or in accordance with design and the like.

Specifically, the vehicle 1 including the seat belt controller 11 (seat belt controlling system 10) has the ABSs 9 for the respective wheels 2R, 2L, 3R and 3L. The present invention is, however, not limited to the above. Connecting a single ABS with the rotary speed sensors 15 for respective wheels 2R, 2L, 3R and 3L is allowed, where the single ABS controls the brake pressure. Otherwise, an operation signal from the single ABS can control winding of the seat belts 13R and 13L.

In addition, based on the operation signals ABS (FR_RH), ABS (FR_LH), ABS (RR_RH) and ABS (RR_LH), the seat belt controller 11 controls timing for winding the seat belts 13R and 13L. The present invention is, however, not limited to the above. For controlling the winding of the seat belts 13R and 13L, a braking control signal from a stability control system (controlling lateral slippery of the vehicle 1) such as VDC (vehicle dynamics control) to the wheels 2R, 2L, 3R and 3L is allowed, or an output signal from an alarm system such as LDP (Lane Departure Prevention) and the like can determine that the seat occupant of the vehicle 1 should keep a posture.

This application is based on a prior Japanese Patent Application No. P2005-210228 (filed on July 20, 2005 in Japan). The entire contents of the Japanese Patent Application No. P2005-210228 from which priority is claimed are incorporated herein by reference, in order to take some protection against translation errors or omitted portions.

The scope of the present invention is defined with reference to the following claims.

## Claims

1. A seat belt controlling system (10), comprising:
1) an outputting system (9) for outputting a signal {ABS (FR_RH), ABS (FR_LH), ABS (RR_RH), ABS (RR_LH)} showing a rotary state of each of wheels (2R, 2L, 3R, 3L) of a vehicle (1);
2) a determinant (11) for determining whether or not a restraining of a seat occupant of the vehicle (1) is necessary, based on the signals {ABS (FR_RH), ABS (FR_LH), ABS (RR_RH), ABS (RR_LH)} which are outputted from the outputting system (9) and correspond to the respective wheels (2R, 2L, 3R, 3L); and
3) a seat belt controller (11) for implementing the following windings of a seat belt (13L, 13R):
a) a first winding implemented when the determinant (11) determines that two or more of the wheels (2R, 2L, 3R, 3L) are in a state necessary for the restraining of the seat occupant, and
b) a second winding implemented when the determinant (11) determines that one of the wheels (2R, 2L, 3R, 3L) is in a state necessary for the restraining of the seat occupant, the second winding being weaker than the first winding in winding force, the first winding being implemented after a continuation of a certain time (Tb) of the second winding.

2. The seat belt controlling system (10) as claimed in claim 1 wherein,
the signal {ABS (FR_RH), ABS (FR_LH), ABS (RR_RH), ABS (RR_LH)} is outputted from an anti-lock brake system (9), each of the signals {ABS (FR_RH), ABS (FR_LH), ABS (RR_RH), ABS (RR_LH)}showing the rotary state of one of the wheels (2R, 2L, 3R, 3L).

3. The seat belt controlling system (10) as claimed in claim 1 wherein,
the certain time (Tb) of the second winding is 1 second.

4. The seat belt controlling system (10) as claimed in claim 1, further comprising:
a vehicle state sensor (12) for sensing a state around the vehicle (1),
wherein
based on the state around the vehicle (1) sensed with the vehicle state sensor (12), the higher the necessity for restraining the seat occupant is, the shorter the certain time (T1, T2, T3) is set by the seat belt controller (11).

5. The seat belt controlling system (10) as claimed in claim 4, wherein the vehicle state sensor (12) is a navigator (12).

6. The seat belt controlling system (10) as claimed in claim 4, wherein the seat belt controller (11) sets the certain time (T1, T2, T3) shorter after sensing that the one of the wheels (2R, 2L, 3R, 3L) is in the state necessary for the restraining of the seat occupant.

7. A method of controlling a seat belt, comprising:
1) outputting a signal {ABS (FR_RH), ABS (FR_LH), ABS (RR_RH), ABS (RR_LH)} showing a rotary state of each of wheels (2R, 2L, 3R, 3L) of a vehicle (1);
2) determining whether or not a restraining of a seat occupant of the vehicle (1) is necessary, based on the signals {ABS (FR_RH), ABS (FR_LH), ABS (RR_RH), ABS (RR_LH)} which are outputted by the outputting operation and correspond to the respective wheels (2R, 2L, 3R, 3L); and
3) implementing the following windings of a seat belt (13L, 13R):
a) a first winding implemented when the determining operation determines that two or more of the wheels (2R, 2L, 3R, 3L) are in a state necessary for the restraining of the seat occupant, and
b) a second winding implemented when the determining operation determines that one of the wheels (2R, 2L, 3R, 3L) is in a state necessary for the restraining of the seat occupant, the second winding being weaker than the first winding in winding force, the first winding being implemented after a continuation of a certain time (Tb) of the second winding.

8. A seat belt controlling system (10), comprising:
1) means (9) for outputting a signal {ABS (FR_RH), ABS (FR_LH), ABS (RR_RH), ABS (RR_LH)} showing a rotary state of each of wheels (2R, 2L, 3R, 3L) of a vehicle (1);
2) means (11) for determining whether or not a restraining of a seat occupant of the vehicle (1) is necessary, based on the signals {ABS (FR_RH), ABS (FR_LH), ABS (RR_RH), ABS (RR_LH)} which are outputted from the outputting means (9) and correspond to the respective wheels (2R, 2L, 3R, 3L); and
3) means (11) for implementing the following windings of a seat belt (13L, 13R):
a) a first winding implemented when the determining means (11) determines that two or more of the wheels (2R, 2L, 3R, 3L) are in a state necessary for the restraining of the seat occupant, and
b) a second winding implemented when the determining means (11) determines that one of the wheels (2R, 2L, 3R, 3L) is in a state necessary for the restraining of the seat occupant, the second winding being weaker than the first winding in winding force, the first winding being implemented after a continuation of a certain time (Tb) of the second winding.
